# EUROPEAN PATENT APPLICATION

(11) **EP 4 253 080 A1**
(43) Date of publication of application: **04.10.2023**
(21) Application number: 21897697.5
(22) Date of filing: 09.11.2021
(51) Int. Cl.: B60C 1/00, B60C 13/00, C08L 7/00, C08L 9/00, C08K 3/04

(54) **RUBBER COMPOSITION FOR TIRES**

(30) Priority: 24.11.2020 JP 2020194221
(71) Applicant: The Yokohama Rubber Co., Ltd., Hiratsuka-shi, Kanagawa 254-8601 (JP)
(72) Inventor: NOGUCHI, Fumitoshi, Hiratsuka-shi, Kanagawa 254-8601 (JP)
(74) Representative: Dilg, Haeusler, Schindelmann Patentanwaltsgesellschaft mbH
(86) International application number: PCT/JP2021/041110
(87) International publication number: WO 2022/113722

(57) **Abstract**

Provided is a rubber composition for a tire, which can provide reduced heat build-up and well-balanced hardness and elongation in a sidewall portion in a highly compatible manner. Thirty parts by mass or more of carbon black having a CTAB adsorption specific surface area of 100 m²/g or less is blended into 100 parts by mass of a conjugated diene-based copolymer that includes from 20 mass% to 60 mass% of a first conjugated diene-based copolymer containing an isoprene component and from 40 mass% to 80 mass% of a second conjugated diene-based copolymer containing syndiotactic-1,2-polybutadiene. The syndiotactic-1,2-polybutadiene having a content of a crystallized component of 90% or more, a melting point of 130°C or lower, and a glass transition temperature Tg of -20°C or higher is used. A content rate of a crystallized component in the second conjugated diene-based copolymer is 30 mass% or less.

## Description

### Technical Field

The present invention relates to a rubber composition for a tire intended to be mainly used for a sidewall portion of a tire.

### Background Art

Tires for trucks and buses have a larger load to be applied than tires for passenger vehicles and tend to have greater fatigue due to repeated bending of a sidewall portion. The tires for trucks and buses also tend to be frequently subjected to external damage, such as puncturing. Thus, ensuring well-balanced hardness and elongation in the sidewall portion and durability against external damage and fatigue due to repeated bending is awaited (see, for example, Patent Document 1).

On the other hand, with a recent rising demand for environmental protection, the tires for trucks and buses also need to reduce tire rolling resistance and improve fuel economy performance of a vehicle. Known methods of reducing rolling resistance (reducing heat build-up) include increasing a blended amount of a vulcanizing agent or reducing a blended amount of carbon black. However, the former has difficulty in maintaining good elongation characteristics, and the latter has difficulty in ensuring sufficient hardness, and providing these performances in a compatible manner has been difficult. Consequently, measures to reduce heat build-up while ensuring well-balanced hardness and elongation and achieving excellent durability in a sidewall portion are awaited.

### Citation List

### Patent Literature

Patent Document 1: JP 2015-124284 A

### Summary of Invention

### Technical Problem

An object of the present invention is to provide a rubber composition for a tire, which can provide reduced heat build-up and well-balanced hardness and elongation in a sidewall portion in a highly compatible manner.

### Solution to Problem

A rubber composition for a tire according to an embodiment of the present invention is a rubber composition for a tire in which 30 parts by mass or more of carbon black having a CTAB adsorption specific surface area of 100 m²/g or less is blended per 100 parts by mass of a conjugated diene-based copolymer that includes from 20 mass% to 60 mass% of a first conjugated diene-based copolymer containing an isoprene component and 40 mass% to 80 mass% of a second conjugated diene-based copolymer containing syndiotactic-1,2-polybutadiene. The syndiotactic-1,2-polybutadiene has a content rate of a crystallized component of 90% or more, a melting point of 130°C or lower, and a glass transition temperature Tg of -20°C or higher. A content rate of a crystallized component in the second conjugated diene-based copolymer is 30 mass% or less.

### Advantageous Effects of Invention

As described above, the rubber composition for a tire according to an embodiment of the present invention can provide, by blending appropriate amounts of the specific conjugated diene-based copolymers (the first and second conjugated diene-based copolymers) and the specific carbon black, reduced heat build-up and well-balanced hardness and elongation in a highly compatible manner. In particular, the syndiotactic-1,2-polybutadiene having a content rate of a crystallized component of 90% or more, a melting point of 130°C or lower, and a glass transition temperature Tg of -20°C or higher is used, and the content rate of syndiotactic-1,2-polybutadiene in the second conjugated diene-based copolymer is set in an appropriate range. This can reduce heat build-up while suitably maintaining hardness and elongation. In addition, the content of the syndiotactic-1,2-polybutadiene maintained in an appropriate range makes the dispersion satisfactory, and the durability (wear resistance) of the tire can be ensured without the hardness degraded.

The rubber composition for a tire according to an embodiment of the present invention can be suitably used for a side rubber layer disposed on an outer side of a carcass layer in a sidewall portion of a tire that includes a tread portion extending in a tire circumferential direction and having an annular shape, a pair of sidewall portions respectively disposed on both sides of the tread portion, a pair of bead portions each disposed on an inner side of the pair of sidewall portions in a tire radial direction, and a carcass layer mounted between the pair of bead portions. In other words, since the sidewall portion of the tire tends to have great fatigue due to repeated bending and to be frequently subjected to external damage, such as puncturing, using the rubber composition for a tire according to an embodiment of the present invention having excellent hardness and elongation for the sidewall portion (side rubber layer) can improve durability of the tire. In addition, since the rubber composition according to an embodiment of the present invention is also superior in low heat build-up as described above, reducing heat build-up (improving fuel efficiency) of the tire can also be achieved.

In the tire using the rubber composition for a tire according to an embodiment of the present invention, a ratio Tc/Ts preferably satisfies a relationship Tc/Ts > 1.0, where Ts is tan δ at 60°C of the side rubber layer and Tc is tan δ at 60°C of a coating rubber covering carcass cords in the carcass layer. In particular, the ratio Tc/Ts preferably satisfies a relationship Tc/Ts > 1.5. This can make the heat build-up of the side rubber layer sufficiently smaller than the heat build-up of the carcass layer (coating rubber), advantageously reducing tire rolling resistance and improving fuel efficiency. The "tan δ at 60°C" is measured at an elongation deformation strain of 10%±2%, a vibration frequency of 20 Hz, and a temperature 60°C with the use of a viscoelastic spectrometer in accordance with JIS K6394.

Moreover, in the tire using the rubber composition for a tire according to an embodiment of the present invention, a ratio Mc/Ms preferably satisfies a relationship Mc/Ms > 1.5, where Ms is a 300% modulus at 23°C of the side rubber layer and Mc is a 300% modulus at 23°C of a coating rubber covering carcass cords in the carcass layer. In particular, the ratio Mc/Ms preferably satisfies a relationship Mc/Ms > 1.75. This can make the modulus of the side rubber layer sufficiently smaller than the modulus of the carcass layer (coating rubber), advantageously reducing the occurrence of torque cracks of the tire during travel and improving tire durability. The "300% modulus at 23°C" is measured at a temperature of 23°C and a tensile speed of 500 mm/minute with the use of a JIS No. 3 dumbbell test piece (thickness: 2 mm) in accordance with JIS K6251.

The tire according to an embodiment of the present invention is preferably a pneumatic tire, but may be a non-pneumatic tire. In a case of a pneumatic tire, the interior thereof can be filled with air, inert gas such as nitrogen, or other gases.

A method of producing the rubber composition for a tire an embodiment of the present invention preferably includes, for example, a first kneading step of kneading a total amount of a first conjugated diene-based copolymer, a portion of a second conjugated diene-based copolymer, and carbon black, and a second kneading step of feeding only a residual amount of the second conjugated diene-based copolymer into a kneaded product obtained in the first kneading step and kneading a resultant product. Alternatively, a method of producing the rubber composition for a tire an embodiment of the present invention preferably includes a first kneading step of kneading a first conjugated diene-based copolymer and carbon black, and a second kneading step of feeding a second conjugated diene-based copolymer into a kneaded product obtained in the first kneading step and kneading a resultant product. Kneading the first and second conjugated diene-based copolymers and the carbon black in such an order can control the carbon black to be preferentially incorporated into the first conjugated diene-based copolymer and improve fatigue resistance of the second conjugated diene-based copolymer while reducing heat build-up.

### Brief Description of Drawings

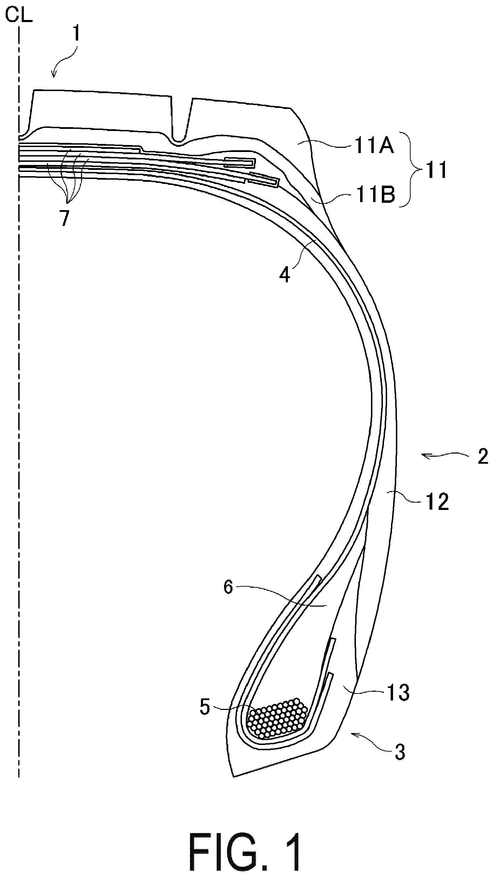

FIG. 1 is a meridian cross-sectional view illustrating an example of a pneumatic tire using a rubber composition for a tire according to an embodiment of the present invention.

### Description of Embodiments

Configurations of embodiments of the present invention will be described in detail below with reference to the accompanying drawings.

As illustrated in FIG. 1, a pneumatic tire that can apply a rubber composition for a tire according to an embodiment of the present invention described below includes a tread portion 1, a pair of sidewall portions 2 respectively disposed on both sides of the tread portion 1, and a pair of bead portions 3 each disposed on an inner side of the pair of sidewall portions 2 in a tire radial direction. A reference sign "CL" in FIG. 1 denotes a tire equator. Although not illustrated in FIG. 1 that is a meridian cross-sectional view, the tread portion 1, the sidewall portions 2, and the bead portions 3 each extend in the tire circumferential direction and have an annular shape, forming a basic structure of a toroidal shape of the pneumatic tire. Although the description using FIG. 1 is basically based on the illustrated meridian cross-sectional shape, all of the tire components extend in the tire circumferential direction and have the annular shape.

A carcass layer 4 is mounted between the left-right pair of bead portions 3. The carcass layer 4 includes a plurality of reinforcing cords (carcass cords) extending in the tire radial direction covered with a coating rubber and is folded back around a bead core 5 disposed in each of the bead portions 3 from an inner side to an outer side in a tire width direction. A bead filler 6 is disposed on an outer periphery of the bead core 5, and the bead filler 6 is enveloped by a body portion and a folded back portion of the carcass layer 4.

A plurality of belt layers 7 (in the illustrated example, four layers) are embedded on an outer circumferential side of the carcass layer 4 in the tread portion 1. Each of the belt layers 7 includes a plurality of reinforcing cords (belt cords) inclined with respect to the tire circumferential direction. The reinforcing cords are arranged intersecting one another between the layers. In these belt layers 7, an inclination angle of the reinforcing cords with respect to the tire circumferential direction is set in a range, for example, from 10° to 60°. Although only the belt layers 7 are provided in the illustrated example, a belt reinforcing layer (not illustrated) can be further provided on the outer circumferential side of the belt layers 7.

A tread rubber layer 11 is disposed on the outer circumferential side of the carcass layer 4 in the tread portion 1. A side rubber layer 12 is disposed on the outer circumferential side (outer side in the tire width direction) of the carcass layer 4 in each of the sidewall portions 2. A rim cushion rubber layer 13 is disposed on the outer circumferential side (outer side in the tire width direction) of the carcass layer 4 in each of the bead portions 3. As in the illustrated example, the tread rubber layer 11 may have a two-layer structure consisting of a cap tread 11A exposed on the surface of the tread portion 1 and an undertreat 11B embedded in an inner side of the cap tread 11A in the radial direction.

The rubber composition for a tire according to an embodiment of the present invention is suitably used for the side rubber layer 12 in the tire having the structure as described above. In other words, the rubber composition for a tire according to an embodiment of the present invention has excellent hardness and elongation and excellent low heat build-up as will be described later, improving durability and reducing heat build-up (improving fuel efficiency) of the tire can be achieved by using the rubber composition in the sidewall portion 2 (side rubber layer 12) that tends to have great fatigue due to repeated bending and to be frequently subjected to external damage, such as puncturing.

The rubber composition for a tire according to an embodiment of the present invention is composed mainly of a conjugated diene-based copolymer. In particular, an embodiment of the present invention necessarily include a first conjugated diene-based copolymer containing an isoprene component and a second conjugated diene-based copolymer containing syndiotactic-1,2-polybutadiene.

It is only required that the first conjugated diene-based copolymer contains an isoprene component as described above. Examples of the first conjugated diene-based copolymer containing an isoprene component include natural rubber and isoprene rubber. The proportion of the first conjugated diene-based copolymer in the entire conjugated diene-based copolymer ranges from 20 mass% to 60 mass% and preferably from 30 mass% to 55 mass%. Such an appropriate range of the blended amount of the first conjugated diene-based copolymer in this manner can improve the effect of suppressing the occurrence of cracks caused by puncturing. If the proportion of the first conjugated diene-based copolymer in the entire conjugated diene-based copolymer is less than 20 mass%, breaking strength decreases. If the proportion of the first conjugated diene-based copolymer in the entire conjugated diene-based copolymer exceeds 60 mass%, bending fatigue resistance decreases.

The second conjugated diene-based copolymer contains syndiotactic-1,2-polybutadiene as described above. Syndiotactic-1,2-polybutadiene is a conjugated diene-based copolymer having high crystallizability, and in the second conjugated diene-based copolymer, a crystallized component of syndiotactic-1,2-polybutadiene is compatibilized. The crystallized component of syndiotactic-1,2-polybutadiene is mainly a 1,2-bond component, i.e., a vinyl bond component. In this case, the content rate of the crystallized component contained in the second conjugated diene-based copolymer is 30 mass% or less and preferably ranges from 5 mass% to 20 mass%. Blending the second conjugated diene-based copolymer having an appropriate content rate of the crystallized component in this manner can be increase the hardness and elongation of the rubber composition. This can have performance (durability against fatigue due to external damage and repeated bending) suitable for the sidewall portion 2 (side rubber layer 12) of the tire can be increased. If the content rate of the crystallized component in the second conjugated diene-based copolymer exceeds 30 mass%, the rubber composition may become too hard to have the durability against fatigue due to repeated bending suitable for the sidewall portion 2 (side rubber layer 12).

An embodiment of the present invention does not use a single material satisfying the aforementioned content rate of the crystallized component as the second conjugated diene-based copolymer but uses a plurality of materials to achieve the aforementioned content rate of the crystallized component. In particular, an embodiment of the present invention uses a syndiotactic-1,2-polybutadiene having characteristics in which the content rate of a crystallized component is 90% or more, the melting point is 130° C or lower, and the glass transition temperature Tg is -20°C or higher. As the syndiotactic-1,2-polybutadiene having such characteristics, commercialized products can be used, and examples thereof include AT300 (content rate of a crystallized component: 93%, melting temperature: 105°C, glass transition temperature Tg: -10°C) available from JSR Corporation, and AT400 (content rate of a crystallized component: 94%, melting temperature: 126°C, glass transition temperature Tg: -2°C) available from JSR Corporation. The syndiotactic-1,2-polybutadiene having such characteristics can satisfactorily have hardness and elongation and improve low heat build-up of the rubber composition. If the content rate of the crystallized component is less than 90%, hardness increases, but fracture characteristics degrade. If the melting point exceeds 130°C, the compatibility between conjugated polymers decreases during mixing. If the glass transition temperature Tg is lower than -20°C, the content rate of the crystallized component necessary for maintaining hardness decreases. In the syndiotactic-1,2-polybutadiene used for an embodiment of the present invention, the content rate of the crystallized component is preferably 91% to 96%, the melting point preferably ranges from 92°C to 95°C, and the glass transition temperature Tg preferably ranges from -18°C to +5°C. In an embodiment of the present invention, the content rate of the crystallized component is a value calculated from the spectral intensity obtained by Fourier transform infrared spectroscopic method. The glass transition temperature Tg and the melting point are values measured by differential scanning calorimetry.

If the total amount of the second conjugated diene-based copolymer is syndiotactic-1,2-polybutadiene having the aforementioned characteristics, the aforementioned condition that the content rate of the crystallized component is 30 mass% or less is not satisfied. In other words, in an embodiment of the present invention, the second conjugated diene-based copolymer contains the other polybutadiene (e.g., polybutadiene rubber) in addition to the syndiotactic-1,2-polybutadiene having the aforementioned characteristics. When the other polybutadiene also contains syndiotactic-1,2-polybutadiene, the content rate of the crystallized component is calculated by dividing the total amount of crystal contained in the aforementioned syndiotactic-1,2-polybutadiene and a crystallized component contained in the other polybutadiene by the blended amount of the second conjugated diene-based copolymer (the sum of the blended amount of the aforementioned syndiotactic-1,2-polybutadiene and the blended amount of the other polybutadiene).

The proportion of the second conjugated diene-based copolymer in the entire conjugated diene-based copolymer ranges from 40 mass% to 80 mass% and preferably from 45 mass% to 70 mass%. Such an appropriate range of the blended amount of the second conjugated diene-based copolymer in this manner advantageously increases the hardness and elongation of the rubber composition. If the proportion of the second conjugated diene-based copolymer in the entire conjugated diene-based copolymer is less than 40 mass%, durability against fatigue due to repeated bending decreases. If the proportion of the second conjugated diene-based copolymer in the entire conjugated diene-based copolymer exceeds 80 mass%, breaking strength decreases.

The rubber composition for a tire according to an embodiment of the present invention can contain an other conjugated diene-based copolymer in addition to the first conjugated diene-based copolymer and the second conjugated diene-based copolymer described above. The other conjugated diene-based copolymers that can be used include, except for the first conjugated diene-based copolymer (natural rubber or isoprene rubber) and the second conjugated diene-based copolymer described above (butadiene rubber or the aforementioned syndiotactic-1,2-polybutadiene), a rubber that can be commonly used for a rubber composition for a tire. Examples of the other conjugated diene-based copolymer include styrene-butadiene rubber, butyl rubber, and chloroprene rubber. These other conjugated diene-based copolymer may be used on their own or in any blend without departing from the object of the rubber composition according to an embodiment of the present invention.

The rubber composition for a tire according to an embodiment of the present invention necessarily blends carbon black in the conjugated diene-based copolymer described above. Blending the carbon black in this manner can increase the strength of the rubber composition. In particular, the CTAB adsorption specific surface area of the carbon black used in an embodiment of the present invention is 100 m²/g or less, and is preferably 30 m²/g to 90 m²/g. Blending the carbon black of particles having such a specific diameter in this manner can effectively increase rubber hardness while maintaining low heat build-up. If the CTAB adsorption specific surface area of the carbon black exceeds 100 m²/g, heat build-up degrades. In an embodiment of the present invention, the CTAB adsorption specific surface area of the carbon black is measured in accordance with JIS 6217-3.

The blended amount of carbon black is 30 parts by mass or more and preferably ranges from 40 parts by mass to 60 parts by mass per 100 parts by mass of the aforementioned conjugated diene-based copolymer. Blending such a sufficient amount of carbon black can effectively increase the strength of the rubber composition. If the blended amount of carbon black is less than 30 parts by mass, hardness decreases, making it difficult to sufficiently have tire durability.

The rubber composition for a tire according to an embodiment of the present invention can blend, within a range in which the object of the present invention is not hindered, various additives commonly used for a rubber composition for a tire, such as a vulcanization or crosslinking agent, a vulcanization accelerator, other inorganic fillers other than carbon black (for example, silica, clay, talc, calcium carbonate, mica, and aluminum hydroxide), various types of oil, an anti-aging agent, and a plasticizer. These additives can be kneaded in a typical manner to form a rubber composition to be used for vulcanization or crosslinking. The blended amounts of these additives may be known typical blended amounts without departing from the object of the present invention. The rubber composition for a tire can be produced by mixing each component described above by using a common rubber kneading machine such as a Banbury mixer, a kneader, and a roll.

As described above, the rubber composition for a tire according to an embodiment of the present invention can be kneaded in a typical manner. To more effectively achieve low heat build-up, an embodiment of the present invention preferably adopts the following production method. A typical method of producing a rubber composition for a tire roughly consists of at least two steps, a step of kneading diene rubber (conjugated diene-based copolymer), carbon black, and various compounding agents other than a vulcanization compounding agent, and a step of cooling a kneaded product obtained in the step and then mixing the vulcanization compounding agent. In the former step (step before mixing the vulcanization compounding agent), the first conjugated diene-based copolymer, the second conjugated diene-based copolymer, and the carbon black which are necessarily blended into the rubber composition for a tire according to an embodiment of the present invention are kneaded. The former step preferably includes (a) a first kneading step of kneading a total amount of the first conjugated diene-based copolymer, a portion of the second conjugated diene-based copolymer, and the carbon black, and a second kneading step of feeding only the residual amount of the second conjugated diene-based copolymer into a kneaded product obtained in the first kneading step and kneading a resultant product, or preferably includes (b) a first kneading step of kneading the first conjugated diene-based copolymer and the carbon black, and a second kneading step of feeding the second conjugated diene-based copolymer into a kneaded product obtained in the first kneading step and kneading a resultant product. In either case, at least a portion of the second conjugated diene-based copolymer is fed and kneaded in the second kneading step. Kneading the first and second conjugated diene-based copolymers and the carbon black in such an order allows at least a portion of the second conjugated diene-based copolymer to be fed and kneaded later in either case. This can control the carbon black to be preferentially incorporated into the first conjugated diene-based copolymer and improve fatigue resistance of the second conjugated diene-based copolymer while reducing heat build-up.

Of the aforementioned methods, in the method of feeding the second conjugated diene-based copolymer in two batches as in (a) described above, the second conjugated diene-based copolymer to be fed in the first kneading step is preferably more than 0 mass% and 20 mass% or less of the total amount of the second conjugated diene-based copolymer blended into the rubber composition for a tire according to an embodiment of the present invention, and the second conjugated diene-based copolymer to be fed in the second kneading step is preferably 20 mass% or more and less than 100 mass% of the total amount of the second conjugated diene-based copolymer blended into the rubber composition for a tire according to an embodiment of the present invention. Setting the amounts of the second conjugated diene-based copolymer fed in the first and second kneading steps in this manner advantageously improves fatigue resistance while reducing heat build-up. In the case of (b) described above, the total amount of the second conjugated diene-based polymer is fed in the second step, and thus, expressing in the same manner as above, the second conjugated diene-based copolymer to be fed in the first kneading step is 0 mass% of the total amount of the second conjugated diene-based copolymer blended into the rubber composition for a tire according to an embodiment of the present invention, and the second conjugated diene-based copolymer to be fed in the second kneading step is 100 mass% of the total amount of the second conjugated diene-based copolymer blended into the rubber composition for a tire according to an embodiment of the present invention.

As described above, the second conjugated diene-based copolymer in an embodiment of the present invention may contain a plurality of materials (such as syndiotactic-1,2-polybutadiene and other polybutadienes having the aforementioned characteristics) rather than a single material. When the second conjugated diene-based copolymer contains a plurality of materials and the second conjugated diene-based copolymer is fed in two portions as in (a) described above, a portion or all, preferably all of the syndiotactic-1,2-polybutadiene having the aforementioned characteristics may be fed in the second kneading step. Setting the stages of feeding the syndiotactic-1,2-polybutadiene contained in the second conjugated diene-based copolymer in this manner advantageously improves fatigue resistance while reducing heat build-up.

The rubber composition for a tire according to an embodiment of the present invention can be suitably used for the sidewall portion 2 (side rubber layer 12) of the tire as described above. A tire using the rubber composition for a tire according to an embodiment of the present invention for the sidewall portion 2 (side rubber layer 12) has excellent physical properties (hardness, elongation, and low heat build-up) of the rubber composition for a tire according to an embodiment of the present invention. This can improve durability against fatigue due to repeated bending and external damage, such as puncturing, and reduce heat build-up (improve fuel efficiency).

In using the rubber composition for a tire according to an embodiment of the present invention for the sidewall portion 2 (side rubber layer 12) of the tire, the coating rubber (hereinafter, referred to as carcass coating rubber) that covers the carcass cords forming the carcass layer 4 preferably has sufficiently reduced heat build-up. Specifically, a ratio Tc/Ts preferably satisfies a relationship Tc/Ts > 1.0 and more preferably satisfies a relationship Tc/Ts > 1.5, where Ts is tan δ at 60°C of the side rubber layer 12 and Tc is tan δ at 60°C of the carcass coating rubber. This can make the heat build-up of the side rubber layer 12 sufficiently smaller than the heat build-up of the carcass coating rubber, advantageously reducing tire rolling resistance and improving fuel efficiency. The ratio Tc/Ts of 1.0 or less makes the heat build-up of the side rubber layer 12 substantially equal to that of the carcass coating rubber, failing to sufficiently obtain the effect of reducing tire rolling resistance.

Additionally, in using the rubber composition for a tire according to an embodiment of the present invention for the sidewall portion 2 (side rubber layer 12) of the tire, the coating rubber (hereinafter, referred to as carcass coating rubber) that covers the carcass cords forming the carcass layer 4 preferably has an appropriately reduced modulus. Specifically, a ratio Mc/Ms preferably satisfies a relationship Mc/Ms > 1.5, more preferably satisfies a relationship Mc/Ms > 1.75, and even more preferably satisfies the relationship Mc/Ms > 2.0, where Ms is a 300% modulus at 23°C of the side rubber layer 12 and Mc is a 300% modulus at 23°C of the carcass coating rubber. This can make the modulus of the side rubber layer sufficiently smaller than the modulus of the carcass layer (coating rubber), advantageously reducing the occurrence of torque cracks of the tire at the time of starting driving and improving tire durability. The ratio Mc/Ms of 1.5 or less makes the modulus of the side rubber layer 12 substantially equal to the modulus of the carcass coating rubber and thus cannot relieve the torque of the tire, failing to sufficiently obtain the effect of suppressing the occurrence of cracks.

An embodiment of the present invention will further be described below by way of Examples, but the scope of an embodiment of the present invention is not limited to Examples.

### Examples

In preparing 16 types of rubber compositions for a tire (Standard Example 1, Comparative Examples 1 to 6, and Examples 1 to 9) consisting of the compounding proportion indicated in Table 1, compounding ingredients other than a vulcanization accelerator and sulfur were weighed for the rubber compositions and kneaded in a 1.8 L sealed Banbury mixer for 5 minutes. Then, a master batch was discharged and cooled at room temperature. Thereafter, the master batch was added into the 1.8 L sealed Banbury mixer, and the vulcanization accelerator and sulfur were mixed for two minutes to obtain the 16 types of rubber compositions for a tire.

The obtained 16 types of rubber compositions for a tire were vulcanized at 145°C for 35 minutes in a predetermined mold to produce vulcanized rubber test pieces consisting of the respective rubber compositions for a tire.

"Tc/Ts" described in Table 1 is a ratio between tan δ at 60°C of the side rubber layer (Ts) and tan δ at 60°C of the carcass coating rubber (Tc). The carcass coating rubber consists of the compounding proportion indicated in Table 2 and was prepared by the same method as that of the rubber compositions for a tire according to an embodiment of the present invention described above, and vulcanized rubber test pieces were produced. Tc and Ts were measured at an elongation deformation strain of 10%±2%, a vibration frequency of 20 Hz, and a temperature 60°C by using the vulcanized rubber test pieces of the respective rubber compositions and a viscoelastic spectrometer in accordance with JIS K6394.

"Mc/Ms" described in Table 1 is a ratio between a 300% modulus at 23°C of the side rubber layer (Ms) and a 300% modulus at 23°C of the carcass coating rubber (Mc). The carcass coating rubber consists of the compounding proportion indicated in Table 2 and was prepared by the same method as that of the rubber composition for a tire according to an embodiment of the present invention described above, and vulcanized rubber test pieces were produced. Mc and Ms were measured at a temperature of 23°C and a tensile speed of 500 mm/minute by using the vulcanized rubber test pieces of the respective rubber compositions and a JIS No. 3 dumbbell test piece (thickness of 2 mm) in accordance with JIS K6251.

The hardness, elongation, low heat build-up, and tire durability of the obtained rubber composition for a tire (vulcanized rubber test pieces) were evaluated by the methods described below.

### Hardness

The rubber hardness of each of the vulcanized rubber test pieces was measured at a temperature of 20°C with a type A durometer in accordance with JIS K6253. The evaluation results are expressed as index values with respect to the value of Standard Example 1 assigned 100. Larger index values indicate higher hardness. The index value of "95" or more means that a sufficient hardness for a side rubber of a pneumatic tire is obtained, and the index value of " 100" or more means that a hardness is equal to or higher than the hardness of Standard Example 1 and more suitable for a side rubber.

### Elongation

A JIS No. 3 dumbbell test piece (thickness: 2 mm) was punched out from each of the vulcanized rubber test pieces in accordance with JIS K6251, and the tensile elongation at break of the test piece was measured at a temperature of 23°C and a tensile speed of 500 mm/minute in accordance with JIS K6251. The obtained results are expressed as index values with respect to the value of Standard Example 1 assigned 100. Larger index values indicate larger tensile elongation at break and better elongation properties.

### Low heat build-up

The tan δ of each of the vulcanized rubber test pieces was measured at an elongation deformation strain of 10%±2%, a vibration frequency of 20 Hz, and a temperature 60°C with the use of a viscoelastic spectrometer in accordance with JIS K6394 and used as an indicator of low heat build-up. The evaluation results are expressed, by using the reciprocal of the measurement values, as index values with respect to the value of the Standard Example 1 assigned 100. Larger index values indicate lower rolling resistance and more excellent low heat build-up.

### Tire durability

Pneumatic tires (test tires) having the basic structure illustrated in FIG. 1 and a tire size of 275/80R22.5 151/148J were manufactured by using, for the side rubber, 16 types of rubber compositions for a tire (Standard Example 1, Comparative Examples 1 to 6, and Examples 1 to 9), which consist of the compounding proportion indicated in Table 1. In this case, for the carcass coating rubber forming the carcass layer, one indicated in the column "Carcass coating rubber type" in Table 1 (carcass coating rubber A or B having the compounding proportion indicated in Table 2) was used. The conditions for respective portions other than the carcass layer and the side rubber were common to all of the test tires. The following two types of durability tests were conducted for the test tires. The comprehensive evaluations are indicated as "Tire durability" in Table 1.
- Durability Test 1: Each of the test tires was assembled to a wheel having a rim size of 22.5×7.50, inflated to air pressure of 900 kPa for the front and air pressure of 900 kPa for the rear, mounted on a test vehicle (tractor head) of 12770 cc displacement, and driven on a paved road surface, and the depth (an average value when the test was conducted three times for each test tire) of a damage (side cut) of the sidewall portion caused by running on a curb (height 100 mm) at an approach angle of from 25° to 35° during acceleration at a speed 15 km/h was measured. The evaluation results of Durability Test 1 are expressed as index values with respect to the reciprocal of Standard Example 1 assigned 100.
- Durability Test 2: After the aforementioned test vehicle was driven for 100000 km in markets, a running test was further conducted by using a drum testing machine (drum diameter 1707 mm) at a speed of 50km/h until a failure occurred in the tire, and the running distance until the failure occurred was measured. The evaluation results of Durability Test 2 are expressed as index values with respect to the measurement value of Standard Example 1 assigned 100.
- Comprehensive Evaluation: In the aforementioned Durability Tests 1 and 2, evaluation was performed in three stages: "Good" when the index value was improved by 10% or more with respect to Standard Example 1; "Poor" when the index value was reduced by 10% or more with respect to Standard Example 1; and "Fair" when the index value with respect to Standard Example 1 was improved by less than 10% and reduced by less than 10%.

### Table 1

**Table 1-1**

| | | Standard Example 1 | Example 1 | Comparative Example 1 | Comparative Example 2 | Comparative Example 3 |
|---|---|---|---|---|---|---|
| NR | Parts by mass | 60 | 60 | 60 | 60 | 60 |
| BR | Parts by mass | 10 | 36.4 | 10 | 40 | 25 |
| VCR | Parts by mass | 30 | | 30 | | |
| AT300 | Parts by mass | | 3.6 | | | 15 |
| CB1 | Parts by mass | 40 | | | | |
| CB2 | Parts by mass | | 45 | 45 | 52.5 | 40 |
| Oil | Parts by mass | 5 | 5 | 5 | 5 | 5 |
| Wax | Parts by mass | 2 | 2 | 2 | 2 | 2 |
| Anti-aging agent | Parts by mass | 2 | 2 | 2 | 2 | 2 |
| Zinc oxide | Parts by mass | 3 | 3 | 3 | 3 | 3 |
| Stearic acid | Parts by mass | 1 | 1 | 1 | 1 | 1 |
| Sulfur | Parts by mass | 2 | 2 | 2 | 2 | 2 |
| Vulcanization accelerator | Parts by mass | 1 | 1 | 1 | 1 | 1 |
| Content rate of crystallized component | Mass% | 9.3 | 9.3 | 9.3 | 1.0 | 35.5 |
| Type of carcass coating rubber | | B | B | B | B | B |
| Tc/Ts | | 1.15 | 1.67 | 1.52 | 1.25 | 1.88 |
| Mc/Ms | | 2.0 | 2.0 | 2.0 | 2.0 | 1.4 |
| Hardness | Index value | 100 | 100 | 100 | 100 | 113 |
| Elongation | Index value | 100 | 109 | 101 | 98 | 107 |
| Low heat build-up | Index value | 100 | 131 | 124 | 108 | 138 |
| Tire durability | Rating | Fair | Good | Fair | Poor | Fair |

**Table 1-2**

| | | Example 2 | Example 3 | Example 4 | Comparative Example 4 | Example 5 | Comparative Example 5 |
|---|---|---|---|---|---|---|---|
| NR | Parts by mass | 60 | 60 | 60 | 61 | 55 | 60 |
| BR | Parts by mass | 27.5 | 30 | 38 | 35.5 | 41 | 36.4 |
| VCR | Parts by mass | | | | | | |
| AT300 | Parts by mass | 12.5 | 10 | 2 | 3.5 | 4 | 3.6 |
| CB1 | Parts by mass | | | | | | 45 |
| CB2 | Parts by mass | 45 | 45 | 45 | 45 | 45 | |
| Oil | Parts by mass | 5 | 5 | 5 | 5 | 5 | 5 |
| Wax | Parts by mass | 2 | 2 | 2 | 2 | 2 | 2 |
| Anti-aging agent | Parts by mass | 2 | 2 | 2 | 2 | 2 | 2 |
| Zinc oxide | Parts by mass | 3 | 3 | 3 | 3 | 3 | 3 |
| Stearic acid | Parts by mass | 1 | 1 | 1 | 1 | 1 | 1 |
| Sulfur | Parts by mass | 2 | 2 | 2 | 2 | 2 | 2 |
| Vulcanization accelerator | Parts by mass | 1 | 1 | 1 | 1 | 1 | 1 |
| Content rate of crystallized component | Mass% | 29.8 | 24.0 | 5.6 | 9.3 | 9.2 | 9.3 |
| Type of carcass coating rubber | | B | B | B | B | B | B |
| Tc/Ts | | 1.82 | 1.76 | 1.50 | 1.88 | 1.67 | 1.25 |
| Mc/Ms | | 1.6 | 1.9 | 2.0 | 1.9 | 2.0 | 1.8 |
| Hardness | Index value | 107 | 102 | 100 | 102 | 100 | 104 |
| Elongation | Index value | 108 | 108 | 109 | 104 | 107 | 102 |
| Low heat build-up | Index value | 137 | 135 | 123 | 138 | 131 | 108 |
| Tire durability | Rating | Good | Good | Good | Fair | Good | Fair |

**Table 1-3**

| | | Comparative Example 6 | Example 6 | Example 7 | Example 8 | Example 9 |
|---|---|---|---|---|---|---|
| NR | Parts by mass | 60 | 60 | 60 | 60 | 60 |
| BR | Parts by mass | 36.4 | 36.4 | 36.4 | 36.4 | 38 |
| VCR | Parts by mass | | | | | |
| AT300 | Parts by mass | 3.6 | 3.6 | 3.6 | 3.6 | 2 |
| CB1 | Parts by mass | | | | | |
| CB2 | Parts by mass | 25 | 35 | 50 | 45 | 45 |
| Oil | Parts by mass | 5 | 5 | 5 | 5 | 5 |
| Wax | Parts by mass | 2 | 2 | 2 | 2 | 2 |
| Anti-aging agent | Parts by mass | 2 | 2 | 2 | 2 | 2 |
| Zinc oxide | Parts by mass | 3 | 3 | 3 | 3 | 3 |
| Stearic acid | Parts by mass | 1 | 1 | 1 | 1 | 1 |
| Sulfur | Parts by mass | 2 | 2 | 2 | 2 | 2 |
| Vulcanization accelerator | Parts by mass | 1 | 1 | 1 | 1 | 1 |
| Content rate of crystallized component | Mass% | 9.3 | 9.3 | 9.3 | 9.3 | 5.6 |
| Type of carcass coating rubber | | B | B | B | A | A |
| Tc/Ts | | 2.50 | 2.14 | 1.50 | 1.22 | 1.10 |
| Mc/Ms | | 2.6 | 2.1 | 1.8 | 1.5 | 1.5 |
| Hardness | Index value | 92 | 97 | 104 | 100 | 100 |
| Elongation | Index value | 123 | 111 | 106 | 109 | 109 |
| Low heat build-up | Index value | 136 | 134 | 123 | 131 | 123 |
| Tire durability | Rating | Fair | Good | Good | Good | Good |

Types of raw materials used as indicated in Table 1 are described below.
- NR: natural rubber, TSR20
- Br: Butadiene rubber, BR150 (content rate of crystallized component: less than 1%, glass transition temperature Tg: -105°C), available from Ube Industries, Ltd.
- VCR: Butadiene rubber including syndiotactic-1,2-polybutadiene, UBEPOL VCR412 (content rate of crystallized component: 12%, glass transition temperature Tg: -104°C), available from Ube Industries, Ltd.
- AT300: AT300 (content rate of crystallized component: 93%, melting point: 105°C, glass transition temperature Tg: -10°C), available from JSR Corporation
- CB1: carbon black, SEAST 3 (CTAB adsorption specific surface area: 79 m²/g), available from Tokai Carbon Co., Ltd.
- CB2: carbon black, SEAST SO (CTAB adsorption specific surface area: 42 m²/g), available from Tokai Carbon Co., Ltd.
- Oil: NH-70S, available from Idemitsu Kosan Co., Ltd.
- Wax: OZOACE-0015A, available from Nippon Seiro Co., Ltd.
- Anti-aging agent: NOCRAC 6C, available from Ouchi Shinko Chemical Industrial Co., Ltd.
- Zinc oxide: Zinc Oxide III, available from Seido Chemical Industry Co., Ltd.
- Stearic acid: Stearic acid 50S for industrial use, available from Nissin Chemical Co., Ltd.
- Sulfur: Golden Flower oil treated sulfur powder, available from Tsurumi Chemical Industry Co., Ltd.
- Vulcanization accelerator: SANCELER NS-G, available from Sanshin Chemical Industry Co., Ltd.

### Table 2

**Table 2**

| | | Carcass coating rubber A | Carcass coating rubber B |
|---|---|---|---|
| NR | Parts by mass | 100 | 100 |
| CB | Parts by mass | 40 | 50 |
| Organic acid cobalt salt | Parts by mass | 0.1 | 0.2 |
| Wax | Parts by mass | 0.5 | 0.5 |
| Anti-aging agent | Parts by mass | 2 | 2 |
| Zinc oxide | Parts by mass | 10 | 10 |
| Stearic acid | Parts by mass | 0.5 | 0.5 |
| Sulfur | Parts by mass | 6 | 7 |
| Vulcanization accelerator | Parts by mass | 1 | 0.8 |

The types of raw materials used as indicated in Table 2 are described below.
- NR: natural rubber, TSR20
- CB1: carbon black, SEAST 3 (CTAB adsorption specific surface area: 79 m²/g), available from Tokai Carbon Co., Ltd.
- Organic acid cobalt salt: Cobalt borate neodecanoate, available from DIC Corporation (Note that the values in the table are the amounts of Co.)
- Wax: OZOACE-0015A, available from Nippon Seiro Co., Ltd.
- Anti-aging agent: NOCRAC 6C, available from Ouchi Shinko Chemical Industrial Co., Ltd.
- Zinc oxide: Zinc Oxide III, available from Seido Chemical Industry Co., Ltd.
- Stearic acid: Stearic acid 50S for industrial use, available from Nissin Chemical Co., Ltd.
- Sulfur: Golden Flower oil treated sulfur powder, available from Tsurumi Chemical Industry Co., Ltd.
- Vulcanization accelerator: SANCELER NS-G, available from Sanshin Chemical Industry Co., Ltd.

As can be seen from Table 1, the rubber compositions for a tire of Examples 1 to 9 provided improved low heat build-up while ensuring hardness and elongation at the level equal to or higher than those of Standard Example 1, and provided these performances in a highly compatible manner. In addition, pneumatic tires in which these rubber compositions for a tire were used for the sidewall portions exhibited good tire durability.

On the other hand, in Comparative Example 1, since the content rate of a crystallized component of syndiotactic-1,2-polybutadiene was low and the transition temperature Tg was low, a sufficient elongation was not obtained, and tire durability could not be improved as compared with Standard Example 1. In Comparative Example 2, since syndiotactic-1,2-polybutadiene was not included, a sufficient elongation was not obtained, and tire durability was degraded as compared with Standard Example 1. In Comparative Example 3, since the content rate of syndiotactic-1,2-polybutadiene (content rate of a crystallized component) in the second conjugated diene-based copolymer was large, the balance between hardness and elongation was degraded, and tire durability could not be improved as compared with Standard Example 1. In Comparative Example 4, since the blended amount of the first conjugated diene-based copolymer (natural rubber) was large and the blended amount of the second conjugated diene-based copolymer (butadiene rubber and AT300) was small, the effect of the present invention was not obtained and tire durability was lowered. In Comparative Example 5, since the CTAB adsorption specific surface area of carbon black is large, heat build-up is lowered and tire durability is lowered. In Comparative Example 6, since the blended amount of carbon black was small, hardness was lowered and tire durability was lowered.

Additionally, for preparing 6 types of rubber compositions for a tire (Standard Example 2, Examples 11 to 15) having the compounding proportion indicated in Table 3, compounding ingredients other than a vulcanization accelerator and sulfur were weighed and kneaded in a 1.8 L sealed Banbury mixer for 5 minutes. Then, a master batch was discharged and cooled at room temperature. In this case, the stages of feeding and kneading the first conjugated diene-based copolymer (NR in the table), the second conjugated diene-based copolymer (BR, VCR, AT300 in the table), and carbon black (CB1, CB2 in the table) were as shown in Table 3. Thereafter, the master batch was added into the 1.8 L sealed Banbury mixer, and the vulcanization accelerator and sulfur were added and mixed for 2 minutes. Thus, the 6 types of rubber compositions for a tire were obtained.

In Table 3, the columns showing the materials fed and kneaded in the first kneading step and the materials fed and kneaded in the second kneading step are provided. When a portion of the materials was fed in the first kneading step and the residual was fed in the second kneading step, the name of the material was followed by parentheses and indicated therein as "portion" or "residual". When there is no particular indication, it means that the total amount of each material was added and kneaded in the stage of each of the columns. Table 3 further shows the value of the amount of the second conjugated diene-based copolymer (BR, VCR, AT300 in the case of the examples in the table) fed later in a case where a portion of the materials was fed in the first kneading step and the residual was fed in the second kneading step. The amount fed later is a proportion (unit: mass%) of the second conjugated diene-based copolymer fed in the second kneading step to the total amount of the second conjugated diene-based copolymer.

Pneumatic tires (test tires) having the basic structure illustrated in FIG. 1 and a tire size of 275/80R22.5 151/148J were manufactured by using the obtained rubber compositions for a tire in the side rubbers. Low-rolling resistance, cut resistance and tire durability were evaluated by the methods described below.

### Low rolling resistance

Each of the test tires was assembled to a wheel having a rim size of 22.5×7.50. A running test was conducted at a speed of 80 km/h and a temperature of -20°C by using a drum testing machine in accordance with ISO 28580, and rolling resistance was measured. The evaluation results are expressed as index values using the reciprocal of the measurement values, with Standard Example 2 being assigned 100. Larger index values indicate lower rolling resistance and superior low rolling resistance.

### Cut resistance

Each of the test tires was assembled to a wheel having a rim size of 22.5×7.50, inflated to air pressure of 900 kPa for the front and air pressure of 900 kPa for the rear, mounted on a test vehicle (tractor head) of 12770 cc displacement, and driven on a paved road surface, and the depth (an average value when the test was conducted three times for each test tire) of a damage (side cut) of the sidewall portion caused by running on a curb (height 100 mm) at an approach angle of from 25° to 35° during acceleration at a speed 15 km/h was measured. The evaluation results are expressed as index values using the reciprocal of the measurement values, with Standard Example 2 being assigned 100.

### Tire durability

Each of the test tires was assembled on a wheel having a rim size of 22.5×7.50, inflated to air pressure of 900 kPa for the front and air pressure of 900 kPa for the rear, and mounted on a test vehicle (tractor head) of 12770 cc displacement. After the test vehicle was driven for 100000 km in markets, a running test was further conducted by using a drum testing machine (drum diameter 1707 mm) at a speed of 50km/h until a failure occurred in the tire, and the running distance until the failure occurred was measured. The measurement results are expressed as index values with the measurement values of Standard Example 2 assign 100. Then, the evaluation of the aforementioned cut resistance and the evaluation based on the aforementioned running distance until the failure occurred were integrated and evaluated as tire durability. The evaluation results are indicated in the following three stages.

Good: In the evaluation based on the cut resistance and the running distance, the index value is improved by 10% or more as compared with Standard Example 2.

Fair: In the evaluation based on the cut resistance and the running distance, the improvement/reduction of the index value with respect to Standard Example 2 is less than 10%.

Poor: In the evaluation based on the cut resistance and the running distance, the index value is decreased by 10% or more with respect to Standard Example 2.

### Table 3

**Table 3**

| | | Standard Example 2 | Example 11 | Example 12 | Example 13 | Example 14 | Example 15 |
|---|---|---|---|---|---|---|---|
| NR | Parts by mass | 60 | 60 | 60 | 60 | 60 | 60 |
| BR | Parts by mass | 10 | 36.4 | 36.4 | 36.4 | 36.4 | 36.4 |
| VCR | Parts by mass | 30 | | | | | |
| AT300 | Parts by mass | | 3.6 | 3.6 | 3.6 | 3.6 | 3.6 |
| CB1 | Parts by mass | 40 | | | | | |
| CB2 | Parts by mass | | 45 | 45 | 45 | 45 | 45 |
| Oil | Parts by mass | 5 | 5 | 5 | 5 | 5 | 5 |
| Wax | Parts by mass | 2 | 2 | 2 | 2 | 2 | 2 |
| Anti-aging agent | Parts by mass | 2 | 2 | 2 | 2 | 2 | 2 |
| Zinc oxide | Parts by mass | 3 | 3 | 3 | 3 | 3 | 3 |
| Stearic acid | Parts by mass | 1 | 1 | 1 | 1 | 1 | 1 |
| Sulfur | Parts by mass | 2 | 2 | 2 | 2 | 2 | 2 |
| Vulcanization accelerator | Parts by mass | 1 | 1 | 1 | 1 | 1 | 1 |
| First kneading step | | NR BR VCR CB1 | NR CB2 | NR BR (portion) AT300 (portion) CB2 | NR AT300 (portion) CB2 | NR BR (portion) CB2 | NR AT300 CB2 |
| Second kneading step | | - | BR AT300 | BR (residual) AT300 (residual) | BR AT300 (residual) | BR (residual) AT300 | BR |
| Amount fed later | Mass% | - | 100 | 25 | 25 | 25 | 91 |
| Low rolling resistance | Index value | 100 | 108 | 108 | 108 | 108 | 108 |
| Cut resistance | Index value | 100 | 130 | 108 | 107 | 109 | 125 |
| Tire durability | Rating | Fair | Good | Good | Good | Good | Good |

Types of materials used in Table 3 are in common with Table 1.

As is clear from Table 3, the rubber compositions for a tire of Examples 11 to 15 provides improved low rolling resistance while securing the cut resistance and tire durability equal to or higher than those of Standard Example 2. In particular, these performances can be achieved in a highly compatible manner in the rubber compositions for a tire of Examples 12 to 16 in which at least a portion of the second conjugated diene-based copolymer was fed and kneaded later at the time of production.

### Reference Signs List

1 Tread portion
2 Sidewall portion
3 Bead portion
4 Carcass layer
5 Bead core
6 Bead filler
7 Belt layer
11 Tread rubber layer
11A Cap tread
11B Undertread
12 Side rubber layer
13 Rim cushion rubber layer
CL Tire equator

## Claims

1. A rubber composition for a tire in which 30 parts by mass or more of carbon black having a CTAB adsorption specific surface area of 100 m²/g or less is blended per 100 parts by mass of a conjugated diene-based copolymer that includes from 20 mass% to 60 mass% of a first conjugated diene-based copolymer containing an isoprene component and from 40 mass% to 80 mass% of a second conjugated diene-based copolymer containing syndiotactic-1,2-polybutadiene,
the syndiotactic-1,2-polybutadiene having a content rate of a crystallized component of 90% or more, a melting point of 130°C or lower, and a glass transition temperature Tg of -20°C or higher, and
a content rate of a crystallized component in the second conjugated diene-based copolymer being 30 mass% or less.

2. A tire, comprising:
a tread portion extending in a tire circumferential direction and having an annular shape;
a pair of sidewall portions respectively disposed on both sides of the tread portion;
a pair of bead portions each disposed on an inner side of the pair of sidewall portions in a tire radial direction; and
a carcass layer mounted between the pair of bead portions;
the rubber composition for a tire according to claim 1 being used for a side rubber layer disposed on an outer side of the carcass layer in each of the sidewall portions.

3. The tire according to claim 2, wherein a ratio Tc/Ts satisfies a relationship Tc/Ts > 1.0, where Ts is tan δ at 60°C of the side rubber layer and Tc is tan δ at 60°C of a coating rubber covering a carcass cord in the carcass layer.

4. The tire according to claim 3, wherein the ratio Tc/Ts satisfies a relationship Tc/Ts > 1.5.

5. The tire according to any one of claims 2 to 4, wherein a ratio Mc/Ms satisfies a relationship Mc/Ms > 1.5, where Ms is a 300% modulus at 23°C of the side rubber layer and Mc is a 300% modulus at 23°C of a coating rubber covering carcass cords in the carcass layer.

6. The tire according to claim 5, wherein the ratio Mc/Ms satisfies a relationship Mc/Ms > 1.75.

7. A method of producing the rubber composition for a tire according to claim 1, comprising:
a first kneading step of kneading a total amount of the first conjugated diene-based copolymer, a portion of the second conjugated diene-based copolymer, and the carbon black; and
a second kneading step of feeding only a residual amount of the second conjugated diene-based copolymer into a kneaded product obtained in the first kneading step and kneading a resultant product.

8. A method of producing the rubber composition for a tire according to claim 1, comprising:
a first kneading step of kneading the first conjugated diene-based copolymer and the carbon black; and
a second kneading step of feeding the second conjugated diene-based copolymer into a kneaded product obtained in the first kneading step and kneading a resultant product.
